Europäisches Patentamt

European Patent Office

Office européen des brevets

(11) Publication number: **0 028 142**
**B1**

(12) **EUROPEAN PATENT SPECIFICATION**

(45) Date of publication of patent specification: **23.05.84**

(51) Int. Cl.³: **G 01 M 3/18, G 01 K 7/34**

(21) Application number: **80303775.3**

(22) Date of filing: **24.10.80**

(54) **Fault detecting sensor and method of detecting faults therewith.**

(30) Priority: **26.10.79 US 88344**
**27.03.80 US 134354**
**16.09.80 US 184647**

(43) Date of publication of application:
**06.05.81 Bulletin 81/18**

(45) Publication of the grant of the patent:
**23.05.84 Bulletin 84/21**

(84) Designated Contracting States:
**BE DE FR IT NL SE**

(56) References cited:
**DE-A-2 458 055**
**DE-C-1 023 102**
**GB-A-1 543 156**
**US-A-3 938 385**
**US-A-3 981 181**
**US-A-4 041 771**

(73) Proprietor: **RAYCHEM CORPORATION**
**300 Constitution Drive**
**Menlo Park California 94025 (US)**

(72) Inventor: **Lutz, Michael Allan**
**3356 La Mesa Drive**
**No 10 San Carlos California 94070 (US)**

(74) Representative: **Dlugosz, Anthony Charles et al**
**Raychem Limited Patent and Legal Department**
**Faraday Road Dorcan**
**Swindon Wiltshire, SN3 5HH (GB)**

Courier Press, Leamington Spa, England.

## Description

This invention relates to sensors for detecting a fault condition, e.g. excessive temperature or leakage of fluid, and to methods of using such sensors.

U.S. Patent document US—A—4,041,771 discloses a sensor for detecting and locating leaks of cryogenic material. The sensor comprises an elongate dielectric tube containing a liquid which will freeze at the reduced temperature in the region of such a leak and which has substantially higher resistivity when frozen than when liquid. A conductor is placed outside the dielectric tube, thus forming a capacitor whose capacitance is periodically measured. The capacitance changes when a leak occurs, and the location of the fault can be determined from the extent of the change.

In one aspect, the present invention provides a sensor for detecting a fault condition in a system, the sensor comprising (a) first electrical conductor, (b) a dielectric element, and (c) a second electrical conductor, arranged to form a capacitor, the second electrical conductor comprising a material the resistivity of which changes upon occurrence of the fault condition, thereby producing a measurable change in capacitance characterised in that the material comprises a solid conductive polymer composition (CPC) comprising solid polymer and electrically conductive particles dispersed in said polymer, which composition increases in resistivity when the sensor is exposed to the fault condition.

In another aspect, the invention provides a method of monitoring a location to detect the occurrence of a fault condition in a system, which method is characterised by providing the location with a fault-detecting sensor as defined above and periodically measuring the capacitance of the sensor.

The CPC element should have a resistance such that the capacitance of the whole sensor can be measured under normal fault-free operating conditions. The resistivity of the CPC and the dimensions of the CPC element should be selected accordingly. When a fault condition occurs at some point on the sensor, the resistance of the CPC element in the fault area should increase to an extent such that the capacitance of only part of the sensor can be measured. When, as is preferred, the sensor is in the form of a cable, the decrease in capacitance is a measure of the distance of the fault from the end of the sensor. When the sensor is in the form of a sheet, the decrease in capacitance is a measure of the area over which the fault condition exists. Preferably the unfaulted sensor has substantially constant capacitance per unit length or area, and generally the sensor will be of constant cross-section.

The fault condition which is detected may be any fault which causes at least a part of the CPC element to increase in resistance to a level such that the capacitance of the sensor drops. One such fault is an excessive temperature, in which case the CPC should be one which exhibits PTC behavior with a switching temperature $(T_s)$ in the region of the excessive temperature which is to be detected. Such excessive temperatures may arise, for example, in localised hot spots in dryers for agricultural products or in high voltage electrical cables. Another such fault is exposure of at least part of the CPC element to a fluid (e.g. a liquid, vaporised liquid or gas which has leaked from a tank or pipe or other conduit) which is absorbed by the CPC and which, when absorbed, causes the resistivity of the CPC to rise. A change in the pressure on the sensor can also be a fault condition. The term "fault condition" is used herein in a broad sense to include a condition which is not in itself harmful to the apparatus to be protected, but which is induced by a harmful condition and which effects the desired change in the resistivity of the CPC.

The novel sensors will often comprise an outer protective layer, usually of dielectric material and usually in physical contact with the CPC element. When the sensor is to detect a leak, the outer layer should be composed of a material which is permeable to the fluid which is present as a result of the leak, for example polyethylene, polypropylene or natural rubber for hydrocarbon leaks and polyvinyl alcohol for water leaks. The protective layer may also contain a metallic braid or other material to improve the mechanical properties of the sensor.

Conductive polymer compositions are well known. Compositions of low resistivity, e.g. less than 10 ohm.cm, preferably less than 1 ohm.cm, are preferred. Compositions which exhibit PTC behavior are essential when an over-temperature is to be detected and are often preferred even when another fault condition is to be detected. Reference may be made for example to DE—A—2948350 (US—A—4237441).

The conductive particles preferably comprise carbon black. The polymer matrix preferably comprises a crystalline polymer, e.g. a polyolefin or a fluoropolymer. The CPC is preferably cross-linked. When a PTC conductive polymer is used, the switching temperature $(T_s)$ of the CPC will be selected with a view to the temperature which is regarded as excessive (if excessively high temperature is the expected fault condition) or with a view to ensuring that the resistivity of the CPC does not increase substantially as a result of expected temperature changes (where another type of fault condition is expected). The $T_s$ may be for example at least 50°C, e.g. 50 to 150°C, or higher, e.g. at least 120°C. The greater the increase in resistivity caused by the fault condition, the better the accuracy of the location of the fault. It is, therefore, preferred that the CPC should increase in resistivity by a factor of at least 4, preferably at least 8, over a temperature range of 10°C, preferably 5°C.

Depending on the nature of the fault, removal of the fault condition will usually return the sensor to its original state.

The electrical conductor will usually be composed of a metal or another material whose resistivity is less than that of the CPC and is preferably substantially invariable under normal operating conditions and under the fault conditions.

The dielectric element may for example be composed of an insulating varnish or an extruded layer of an organic polymer.

The sensor is preferably in the form of a cable, for example one in which the dielectric element surrounds the conductor (typically a metal wire) and is in turn surrounded by the conductive polymer element, or one in which the conductor, dielectric and conductive polymer element are elongated flat layers.

Periodic measurement of the capacitance of the sensor, and comparison of the measured capacitance with the unfaulted capacitance, can readily be carried out using conventional electronically controlled equipment. A plurality of line sensors arranged in a two- or three-dimensional grid can be employed in combination to locate a fault in two or three dimensions. The CPC element will normally be placed as close as possible to the expected origin of the fault condition.

The invention is illustrated in the accompanying drawings, in which

Figures 1 and 2 are cross-sectional views of sensor cables of the invention, and

Figures 3 and 4 are diagrams of circuits for measuring the capacitance of a sensor.

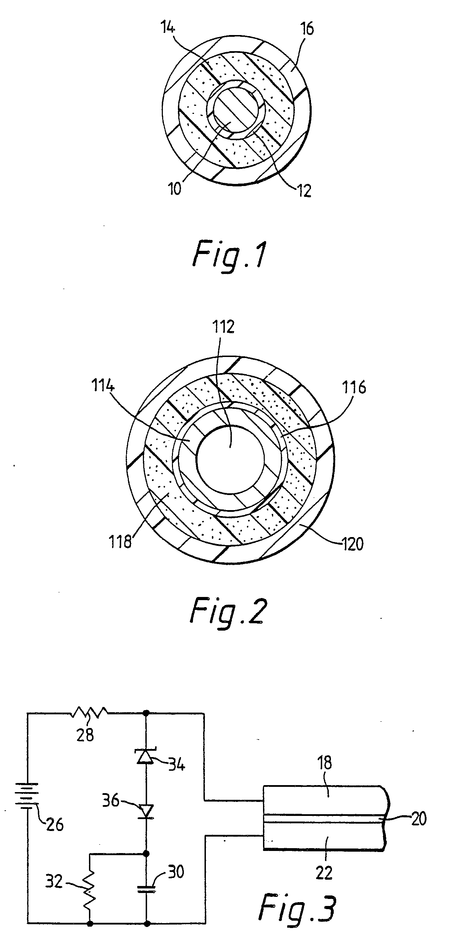

Referring now to Figure 1, the sensor comprises a round metal wire 10 which is surrounded in turn by concentric layer 12 of an insulating varnish, layer 14 of a CPC and layer 16 of an insulating polymer.

Referring now to Figure 2, this shows a sensor which can be used to determine when there has been a loss of pressure in a pressurised system. Conductor 114 is of annular cross-section and defines an interior space 112. Dielectric layer 116, CPC layer 118 and protective layer 120 surround the conductor 114. The components 114, 116, 118 and 120 are such that if the internal pressure in space 112 exceeds the external pressure by a predetermined amount, the tube will expand so that the resistance of the CPC layer increases sharply. The sensor is placed in the pressurised system and the pressure in space 112 is then increased to the same level as the pressurised system. If there is a subsequent localised loss of pressure in the system, a bulge will appear in the sensor at that point and the measured capacitance of the sensor will drop.

Referring now to Figure 3, this shows a circuit diagram for measuring the capacitance of a sheet or flat cable sensor comprising conductive layer 18 and CPC layer 22 separated by dielectric layer 20. Periodically, e.g. every few seconds, battery 26 charges the sensor through resistor 28. Capacitor 30 having capacitance C is initially uncharged, having been bled down through bleeder resistor 32. Prior to the cable reaching the full battery voltage of battery 26, four layer diode 34 breaks down at voltage $V_{4L}$. The cable discharges completely into capacitor 30 (overdamped due to resistance of the layer 22) in a short time. Capacitor 30 cannot discharge in the reverse direction because of diode 36. The peak voltage V of capacitor 30 is measured and compared electronically with the electronically stored peak voltage when the system is fault-free. If the values are different, the location of the fault is electronically calculated and displayed.

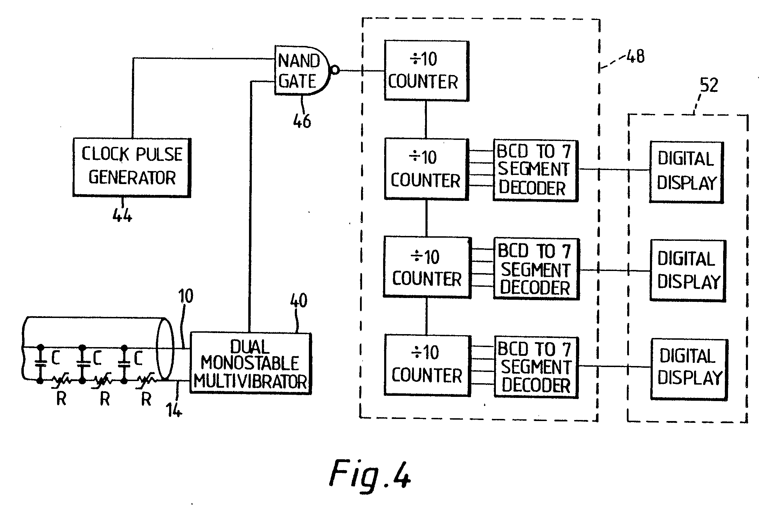

Referring now to Figure 4, this is a block diagram of a capacitance measuring circuit which measures the time to charge the sensor by counting clock pulses. In Figure 4 the sensor is shown as a number of resistance (R) and capacitance (C) sections. The sensor is connected as shown as the capacitance portion of a resistance (R)—capacitance (C) network of one half of a dual monostable multivibrator 40. The RC time constant thus formed determines the length of time that the monostable multivibrator 40 is in its "on" state. A signal from a constant-frequency clock generator 44 and the signal from the monostable multivibrator 40 are added in a NAND gate 46. The output of the NAND gate 46 is a burst of pulses, the number of which is determined by the "on" time of the monostable multivibrator 40. These pulses are counted by counter means 48 and displayed on suitable digital display means 52. The other half of the dual monostable multivibrator determines the "off" or discharge time between charging periods.

The circuit is initially adjusted to display a set of digits which correspond to the sensor's known length or area with no faults. When a fault occurs, the proportional decrease of capacitance is displayed as a lesser set of digits which correspond to the location or area of the fault.

The invention is further illustrated by the following Example.

Example 1

An over-temperature sensor was fabricated from a polyolefin based CPC having the following composition: 1633 g. (54 wt. percent) high density polyethylene ("Marlex"® 6003 made by Phillips petroleum), 1331 g. (44 wt. percent) carbon black ("Furnex"® N765 made by Cities Services Co.) and 60.5 g. (2 wt. percent) antioxidant (an oligomer of 4,4-thiobis (3-methyl-6-t-butyl phenol) with an average degree of polymerisation of 3 to 4, as described in U.S. Patent No. 3,986,981). All materials were dried prior to compounding (50°C, 1 Torr (1.33 mbar) for at least 16 hours). A Banbury mixer was preheated by fluxing high density polyethylene for 5 minutes. The composition ingredients were dry blended and introduced into the preheated, water cooled Banbury mixer. After mixing for 4.5 minutes in high gear, the composition was dumped, cooled to room temperature, granulated and dried (50°C, 1 Torr, 16 hours).

A sensor cable of diameter 0.25 cm. was made by extruding this CPC through a 2.5 cm. single screw extruder over a solid copper magnet wire, of diameter 0.08 cm., the varnish insulation of the magnet wire providing the dielectric layer. An insulating layer of high density polyethylene was then extruded onto the cable. The entire cable was then irradiated to 20 Mrads using a 1.0 MeV electron beam.

A 7.5 metre length of this sensor cable was used in conjunction with capacitance measurement apparatus similar to that shown in Figure 4, first to sense and locate an overtemperature fault condition simulated by holding a lighted match under the cable, and then to sense and locate a hydrocarbon leakage fault simulated by immersing a small section of the cable in warm toluene.

## Claims

1. A sensor for detecting a fault condition in a system, the sensor comprising (a) a first electrical conductor (10, 114, 18), (b) a dielectric element (12, 116, 20), and (c) a second electrical conductor (14, 118, 22) arranged to form a capacitor, the second electrical conductor (14, 118, 22) comprising a material the resistivity of which changes upon occurrence of the fault condition, thereby producing a measurable change in capacitance characterised in that the material comprises a solid conductive polymer composition comprising solid polymer and electrically conductive particles dispersed in said polymer, which composition increases in resistivity when the sensor is exposed to the fault condition.

2. A sensor according to Claim 1, in which the composition increases in resistivity when the sensor is exposed to an increase in temperature.

3. A sensor according to Claim 2, wherein the conductive polymer composition is selected to undergo a substantial increase in resistivity at a predetermined threshold switching temperature.

4. A sensor according to Claim 1, 2 or 3, wherein the dielectric element (12, 116, 20) surrounds the first electrical conductor (10, 114, 18), and the second electrical conductor (14, 118, 22) surrounds the dielectric element.

5. A sensor according to Claim 1, 2 or 3, wherein the first electrical conductor (10, 114, 18), the dielectric element (12, 116, 20), and the second electrical conductor (14, 118, 22) are elongate flat layers.

6. A sensor according to any one of Claims 1 to 5 having an outer protective layer (16, 120) which is composed of a dielectric material and which is in physical contact with said conductive polymer composition (14, 118).

7. A sensor according to any of the preceding claims, wherein the conductive polymer composition (14, 118, 22) and any outer layers (16, 120) thereon are permeable to a fluid which is present in the fault condition and which, when absorbed by the conductive polymer composition, causes it to increase in resistivity.

8. A sensor according to any of Claims 1 to 6, wherein the arrangement is such that, in use, the conductive polymer composition is physically stretched by an increase in pressure resulting from the fault condition thereby increasing its resistivity.

9. A sensor according to any one of the preceding claims, wherein the conductive polymer composition exhibits PTC behavior with a switching temperature between 50 and 150°C.

10. A sensor according to any one of the preceding claims, wherein the sensor is in the form of a cable of substantially constant cross-section, whereby the location of the fault can be determined by comparing the respective capacitances of the cable before and during a fault condition.

11. A method of monitoring a location to detect the occurrence of a fault condition in a system, which method is characterised by providing the location with a fault-detecting sensor as claimed in any of the preceding claims and periodically measuring the capacitance of the sensor.

## Revendications

1. Un capteur pour détecter une condition de fonctionnement défectueux dans un système, le capteur comprenant (a) un premier conducteur électrique (10, 114, 18), (b) un élément diélectrique (12, 116, 20) et (c) un second conducteur électrique (14, 118, 22) agencés pour former un condensateur, le second conducteur électrique (14, 118, 22) comprenant une matière dont la résistivité change lorsqu'il se produit une condition de fonctionnement défectueux, produisant ainsi un changement mesurable de la capacité, caractérisé en ce que la matière est une composition polymère conductrice solide comprenant un polymère solide et des particules électriquement conductrices dispersées dans ledit polymère, composition dont la résistivité s'accroît lorsque le capteur est exposé à la condition de fonctionnement défectueux.

2. Un capteur selon la revendication 1, dans lequel la résistivité de la composition s'accroît lorsque le capteur est exposé à un accroissement de température.

3. Un capteur selon la revendication 2, dans lequel la composition polymère conductrice est choisie de façon que sa résistivité soit l'objet d'un accroissement important à une température de seuil de commutation prédéterminée.

4. Un capteur selon la revendication 1, 2 ou 3, dans lequel l'élément diélectrique (12, 116, 20) entoure le premier conducteur électrique (10, 114, 18) et le second conducteur électrique (14, 118, 22) entoure l'élément diélectrique.

5. Un capteur selon la revendication 1, 2 ou 3 dans lequel le premier conducteur électrique (10, 114, 18), l'élément diélectrique (12, 116, 20) et le second conducteur électrique (14, 118, 22) sont des couches plates allongées.

6. Un capteur selon l'une quelconque des revendications 1 à 5, ayant une couche protectrice extérieure (16, 120) qui est composée d'une matière diélectrique et qui est en contact physique avec ladite composition polymère conductrice (14, 118).

7. Un capteur selon l'une quelconque des revendications précédentes, dans lequel la composition · polymère conductrice (14, 118), et toutes les couches extérieures (16, 120) qu'elle porte, sont perméables à un fluide qui est présent dans le cas de la condition de fonctionnement défectueux et qui, lorsqu'il est absorbé par la composition polymère conductrice, provoque l'accroissement de la résistivité de cette dernière.

8. Un capteur selon l'une quelconque des revendications 1 à 6, dans lequel l'agencement est tel qu'en service, la composition polymère conductrice est physiquement allongée par un accroissement de pression résultant de la condition de fonctionnement défectueux, accroissant de ce fait sa résistivité.

9. Un capteur selon l'une quelconque des revendications précédentes, dans lequel la composition polymère conductrice présente un comportement à coefficient de température positif avec une température de commutation comprise entre 50 et 150°C.

10. Un capteur selon l'une quelconque des revendications précédentes, dans lequel le capteur se présente sous la forme d'un câble ayant une section transversale sensiblement constante, de telle sorte que la localisation d'un défaut peut être déterminée par la comparaison des capacités respectives du câble avant et pendant une condition de fonctionnement défectueux.

11. Un procédé de contrôle d'un emplacement pour détecteur l'apparition d'une condition de fonctionnement défectueux dans un système, procédé qui est caractérisé en ce qu'il consiste à munir l'emplacement d'un capteur de détection de défaut de fonctionnement tel que revendiqué dans l'une quelconque des revendications précédentes et à mesurer périodiquement la capacité du capteur.

**Patentansprüche**

1. Fühler zur Anzeige eines fehlerhaften Zustandes in einem System, welcher Fühler umfaßt

(a) einen ersten elektrischen Leiter (10, 114, 18),

(b) ein dielektrisches Element (12, 116, 20) und

(c) einen zweiten elektrischen Leiter (14, 118, 22) angeordnet zur Bildung eines Kondensators, welcher zweite elektrische Leiter (14, 118, 22) aus einem Material ist, dessen spezifischer Widerstand sich beim Auftreten eines fehlerhaften Zustandes verändert, wodurch eine meßbare Veränderung verursacht wird, dadurch gekennzeichnet, daß das Material gebildet wird durch eine feste leitende polymere Masse aus dem festen Polymeren und elektrische leitenden Teilchen, die in dem Polymer dispergiert sind, welche Masse in ihrem spezifischen Widerstand zunimmt, wenn der Fühler dem fehlerhaften Zustand ausgesetzt wird.

2. Fühler nach Anspruch 1, bei welchem die Masse in ihrem spezifischen Widerstand zunimmt, wenn der Fühler einer Temperaturerhöhung ausgesetzt wird.

3. Fühler nach Anspruch 2, bei welchem die lietende polymere Masse so gewählt ist, daß sie eine wesentliche Erhöhung im spezifischen Widerstand bei einer bestimmten Schwellenwert-Schalttemperatur erfährt.

4. Fühler nach Anspruch 1, 2 oder 3, bei welchem das dielektrische Element (12, 116, 20) den ersten elektrischen Leiter (10, 114, 18) umgibt und der zweite elektrische Leiter (14, 118, 22) das dielektrische Element umgibt.

5. Fühler nach Anspruch 1, 2 oder 3, bei welchem der erste elektrische Leiter (10, 114, 18), das dielektrische Element (12, 116, 20) und der zweite elektrische Leiter (14, 118, 22) längliche flache Schichten sind.

6. Fühler nach einem der Ansprüche 1 bis 5 mit einer äußeren Schutzschicht (16, 120), die aus einem dielektrischen Material zusammengesetzt ist und die sich in physikalischem Kontakt mit der erwähnten leitenden polymeren Masse (14, 118) befindet.

7. Fühler nach einem der vorangehenden Ansprüche, bei welchem die leitende polymere Masse (14, 118, 22) und irgendwelche äußeren Schichten (16, 120) auf dieser für ein Fluid durchlässig sind, das in dem fehlerhaften Zustand vorhanden ist und das, wenn es durch die leitende polymere Masse absorbiert wird, deren spezifischen Widerstand erhöht.

8. Fühler nach einem der Ansprüche 1 bis 6, bei welchem die Anordnung derart ist, daß im Gebrauch die leitende polymere Masse physikalisch gestreckt wird durch eine Druckerhöhung, welche die Folge eines fehlerhaften Zustandes ist, wodurch ihr spezifischer Widerstand erhöht wird.

9. Fühler nach einem der vorangehenden Ansprüche, bei welchem die leitende polymere Masse ein PTC-Verhalten bei einer Schalttemperatur zwischen 50 und 150 °C zeigt.

10. Fühler nach einem der vorangehenden Ansprüche, bei welchem der Fühler die Form eines Kabels von im wesentlichen konstantem Querschnitt hat, so daß der Ort des Fehlers bestimmt werden kann durch vergleichen der jeweiligen Kapazitäten des Kabels vor und während einem fehlerhaften Zustand.

11. Verfahren zur Überwachung eines Ortes zur Feststellung des Auftretens eines fehlerhaften Zustandes in einem System, dadurch gekennzeichnet, daß der Ort mit einem Fehleranzeigefühler nach den Vorangehenden Ansprüchen versehen wird und die Kapazität des Fühlers periodisch gemessen wird.

14    16

10    12

*Fig.1*

112

114    116

118    120

*Fig.2*

28

34

26    36    18

20

22

32    30

*Fig.3*

1

Fig.4

DIGITAL DISPLAY

DIGITAL DISPLAY

DIGITAL DISPLAY

52

48

BCD TO 7 SEGMENT DECODER

BCD TO 7 SEGMENT DECODER

BCD TO 7 SEGMENT DECODER

÷10 COUNTER

÷10 COUNTER

÷10 COUNTER

÷10 COUNTER

NAND GATE

46

CLOCK PULSE GENERATOR

44

DUAL MONOSTABLE MULTIVIBRATOR

40

10

14

R  R  R  R

C  C  C  C